# EUROPÄISCHE PATENTSCHRIFT

(11) **EP 3 449 727 B1**
(45) Veröffentlichungstag und Bekanntmachung des Hinweises auf die Patenterteilung: **21.04.2021**
(21) Anmeldenummer: 18191751.9
(22) Anmeldetag: 30.08.2018
(51) Int. Cl.: A22C 11/02, A22C 11/10

(54) **VORRICHTUNG ZUM FÜLLEN SCHLAUCHFÖRMIGER HÜLLEN UND BETREFFENDES VERFAHREN**
DEVICE FOR FILLING TUBULAR CASINGS AND RELATED METHOD
DISPOSITIF DE REMPLISSAGE D'ENVELOPPES EN FORME DE TUYAU ET PROCÉDÉ CORRESPONDANT

(30) Priorität: 31.08.2017 DE 102017120104
(43) Veröffentlichungstag der Anmeldung: 06.03.2019
(73) Patentinhaber: VEMAG Maschinenbau GmbH, 27283 Verden/Aller (DE)
(72) Erfinder: Mach, Matthias, 30539 Hannover (DE); Hagedorn, Jan-Nils, 27283 Verden (DE); Matthies, Heiner, 27419 Kalbe (DE); Grote, Olaf, 27324 Eystrup (DE); Lewin, Alexander, 27283 Verden (DE)
(74) Vertreter: Eisenführ Speiser

(56) Entgegenhaltungen:
- EP-A1- 0 096 378
- EP-A1- 0 110 343
- DE-A1- 3 019 981
- DE-T2- 60 312 360
- DE-T2- 69 818 290

## Beschreibung

Die Erfindung betrifft eine Füllvorrichtung zum Füllen von gerafften, schlauchförmigen Hüllen mit einer pastösen Masse, insbesondere Wurstbrät, mit einem Füllrohr, auf das eine geraffte, schlauchförmige Hülle aufschiebbar ist, einem bewegbaren, ein erstes Ende des Füllrohrs aufnehmendes Aufnahmeteil, welches dazu eingerichtet ist, das Füllrohr in eine Beschickungsposition, in welcher die Hülle auf das Füllrohr aufbringbar ist, und in eine Füllposition, in welcher die Hülle befüllbar ist, zu bewegen, einer axial zur Füllrohrlängsachse bewegbaren Aufschiebeinrichtung zum Aufschieben der Hülle auf das Füllrohr in der Beschickungsposition, und einem auf dem Füllrohr angeordneten, axial bewegbaren Mitnehmerring.

Die Erfindung betrifft ferner ein Verfahren zum Füllen von gerafften, schlauchförmigen Hüllen mit einer mit einer pastösen Masse, insbesondere mittels oben genannter Füllvorrichtung.

Derartige Füllvorrichtungen und Verfahren zum Füllen von gerafften, schlauchförmigen Hüllen mit pastösen Massen, insbesondere mit Wurstbrät, sind im Stand der Technik bekannt. Zur industriellen Würsteproduktion sind Vorrichtungen vorbekannt, bei denen eine zu füllende, schlauchförmige Hülle in einem gerafften Zustand (auch als Darmraupe oder geraupter Darm bezeichnet) automatisiert auf ein Füllrohr aufgebracht wird. An dessen offenem Ende tritt Wurstbrät aus und wird in die auf dem Füllrohr aufgebrachte schlauchförmige Hülle abgegeben. Durch abschnittsweises Verschließen der Hüllen, beispielsweise durch abschnittsweises Verdrehen gegeneinander oder durch andere Maßnahmen wird der kontinuierliche Hüllenstrang nach der Füllung mit Wurstbrät in einzelne Würste unterteilt.

Zur Beschleunigung des Herstellungsprozesses sind im Stand der Technik Füllvorrichtungen offenbart, bei denen mehrere, insbesondere zwei Füllrohre auf einem parallel zur Füllrohrlängsachse rotierbaren Grundkörper mit einem Aufnahmeteil angeordnet sind, die zusammen mit den Füllrohren revolverartig rotierbar sind. Mittels einer solchen Anordnung werden die Beschickung des Füllrohres mit einer gerafften, schlauchförmigen Hülle und die eigentliche Befüllung der Hülle in unterschiedlichen Betriebspositionen ausgeführt. Das Aufbringen der gerafften, schlauchförmigen Hülle auf das Füllrohr in einer sogenannten Beschickungsposition ist bei Vorrichtungen aus dem Stand der Technik weiter automatisiert. So ist vorbekannt, dass die gerafften, schlauchförmigen Hüllen beispielsweise mittels Schiebern aus einem Magazin entnommen werden und mittels der Greifer anschließend so vor dem Füllrohr positioniert werden, dass eine solche Hülle mittels eines Aufschiebers automatisiert auf das Füllrohr aufgebracht werden kann.

Nach dem Aufschieben der Darmraupe auf das Füllrohr wird dieses in eine Füllposition rotiert. In dieser Füllposition erfolgt das Befüllen der gerafften, schlauchförmigen Hüllen. Zum abschnittsweisen Füllen der schlauchförmigen Hüllen und zur Ausbildung einzelner Würste findet daneben im Stand der Technik ein sogenanntes Darm-Bremssystem Verwendung. Die Wurstportionen werden durch eingreifende Abteilelemente in den rotierenden Wurststrang gebildet. Die Hauptfunktion der Darmbremse ist es den Darm auf dem Füllrohr zu halten, sodass der Darm prall gefüllt werden kann.

DE 30 19 981 A1 zeigt eine Magazinvorrichtung für Wursthüllen an einer Wurstfüllmaschine. Die Wurstfüllmaschine umfasst einen drehbaren Revolver an dem zwei Stopfrohre angeordnet sind. Der Füllmaschine ist ferner eine Magazinvorrichtung für auf die Stopfrohre aufziehbare Hüllen zugeordnet. Die Magazinvorrichtung umfasst eine Aufschiebevorrichtung mit einem axial zum Stopfrohr bewegbaren Aufschieber.

Aus DE 698 18 290 T2 ist eine Vorrichtung zum automatisierten Beenden des Füllens einer Wursthülle an einer Wurstherstellmaschine bekannt.

Die vorbekannten Vorrichtungen ermöglichen es, Würste mit hoher Geschwindigkeit vollautomatisiert herzustellen. Allerdings wirkt sich nachteilig beim beschriebenen Stand der Technik aus, dass die Dimensionen, insbesondere die Längen der gerafften, schlauchförmigen Hüllen (Darmraupen) vom Maschinenbediener manuell einzugeben sind. Hierdurch ergibt sich nicht nur eine mögliche Fehlerquelle, sondern auch ein erhöhter manueller Aufwand bei Verwendung unterschiedlich langer, geraffter, schlauchförmigen Hüllen. Darüber hinaus sind die aus dem Stand der Technik vorbekannten Vorrichtungen nur eingeschränkt dazu in der Lage, den Füllprozess zu überwachen. Beispielsweise kommt es gelegentlich vor, dass beim Aufschieben der schlauchförmigen Hüllen auf das Füllrohr die Hüllen ungenügend positioniert sind, während des Aufschiebens abknicken, oder in sich fehlerhaft sind, wobei die genannten Fehlerzustände bei vorbekannten Vorrichtungen nicht erkannt werden. Treten solche Fehlerbedingungen auf, so ist häufig ein Produktionsstop die Folge. Werden Fehlerbedingungen nicht sofort erkannt, so besteht ferner die Gefahr, dass fehlerhafte Würste und damit unter Umständen Ausschussware produziert wird.

Vor diesem Hintergrund lag der Erfindung die Aufgabe zugrunde, eine Vorrichtung und ein Verfahren der eingangs bezeichneten Art dahingehend weiterzubilden, dass die im Stand der Technik aufgefundenen Nachteile möglichst weitgehend behoben werden. Insbesondere sollen eine Vorrichtung und ein Verfahren angegeben werden, die weniger fehleranfällig sind, größere durchschnittlichere Produktionsmenge ermöglichen, eine hohe Produktionsprozesssicherheit aufweisen und den Anlagenbediener entlasten.

Erfindungsgemäß wird die Aufgabe bei einer Vorrichtung der eingangs genannten Art gelöst durch eine Sensiervorrichtung zur Ermittlung der Position des Mitnehmerrings und/oder der Aufschiebeinrichtung beim Aufschieben der gerafften Hülle auf das Füllrohr. Weiterhin wird die Aufgabe erfindungsgemäß bei einem Verfahren der eingangs genannten Art gelöst durch die Schritte: Bereitstellen einer gerafften, schlauchförmigen Hülle, Aufschieben der Hülle auf ein Füllrohr mittels einer Aufschiebeinrichtung, Ermittlung der Position der Aufschiebeinrichtung und/oder eines auf dem Füllrohr angeordneten Mitnehmerrings beim Aufschieben der gerafften Hülle auf das Füllrohr.

Eine solche Sensiervorrichtung ermöglicht eine Sensierung der für den Füllprozess besonders relevanten Größen der Position des Mitnehmerrings und/oder der Position der Aufschiebeinrichtung. Besonders vorteilhaft ist, dass sich aus der Kenntnis mindestens einer der genannten Größen, eine Vielzahl von Informationen bezüglich der Prozessqualität und bezüglich der Steuerung des Verfahrens und der Vorrichtung ermitteln lassen. Beispielsweise lassen sich mittels Kenntnisse dieser Parameter die Dimension der gerafften, schlauchförmigen Hüllen bestimmen, eventuelle Fehler bei Aufschiebvorgängen erkennen und nachgelagerte Verfahrensschritte in Abhängigkeit dieser Parameter optimieren, sodass der Output einer solchen Vorrichtung im Vergleich zu den im Stand der Technik vorbekannten Vorrichtungen erhöht werden kann. Der Prozess der Befüllung ist weniger fehleranfällig.

Die Erfindung wird dadurch weitergebildet, dass die Sensiervorrichtung mindestens einen Wegaufnahmesensor und/oder Linearsensor zur Ermittlung der Position des Mitnehmerrings und/oder der Aufschiebeinrichtung aufweist. Diese Sensoren können beispielsweise, insbesondere Bezug nehmend auf die Aufschiebeinrichtung, entfernt von der gerafften, schlauchförmigen Hülle, beispielsweise durch ein Gehäuse geschützt, angeordnet sein. Es ist damit nicht nötig, dass die Sensoren in unmittelbaren Kontakt treten mit den schlauchförmigen Hüllen. Insgesamt wird somit eine Wartung der Vorrichtung erleichtert und auch eine Kontamination der Sensoren wirkungsvoll vermieden. Auch sind derartige Sensoren bekannt für ihre Langlebigkeit und Messgenauigkeit.

Weiterhin wird bevorzugt, dass der mindestens eine Wegaufnahmesensor und/oder Linearsensor als induktiver Sensor ausgebildet ist. Zusätzlich oder alternativ ist der mindestens eine Wegaufnahmesensor und/oder Linearsensor in einer zweiten Ausführungsform als optischer Sensor ausgebildet. In Abhängigkeit, beispielsweise vom vorhandenen Bauraum, der erforderlichen Messgenauigkeit und dergleichen, können unterschiedliche Sensortypen für sich allein genommen verwendet werden oder geeignet kombiniert werden. Beispielsweise ist auch vorstellbar, Sensoren unterschiedlicher Typen zu kombinieren, um sich Stärken unterschiedlicher Sensortypen zunutze zu machen, Messabweichungen zu kompensieren und Ausfallwahrscheinlichkeiten zu reduzieren.

In einer alternativen Ausführungsform weist die Sensiervorrichtung mindestens einen, mehrere oder alle der folgenden Sensoren auf: Ultraschallsensoren, kapazitive Sensoren, magnetostriktive Wegsensoren.

Weiterhin wird bevorzugt, dass die Positionsbestimmung des Mitnehmerrings mittels eines festen Linearsensors und/oder mehrere fester induktiver Sensoren in Reihe und/oder eines festen induktiven Sensors erfolgen.

Gemäß einer bevorzugten Weiterbildung wird die Position der Aufschiebeinrichtung mittels Rückführung aus dessen Antriebselement ermittelt. Hiermit lassen sich Kostenvorteile realisieren, wobei gleichzeitig eine hohe Messgenauigkeit und Messzuverlässigkeit erzielt werden.

Die Vorrichtung wird dadurch weitergebildet, dass die Sensiervorrichtung eine Steuerungsvorrichtung aufweist, welche zur Bestimmung der Höhenlänge eingerichtet ist. Eine solche Steuerungsvorrichtung dient der Transformation der Sensordaten (Daten zu Position und Translationsgeschwindigkeiten beispielsweise) in Informationen, die auf vielfältige Weise für den Produktionsprozess nutzbar sind. Beispielsweise ist durch ein In-Bezug-Setzen der Position des Mitnehmerrings und der Aufzieheinrichtung die unmittelbare Ermittlung der Länge der gerafften Hüllen möglich. Diese Längen werden somit vollautomatisch erfasst und sind vom Bediener nicht länger manuell einzugeben. Auch werden Längentoleranzen der zu füllenden Hüllen detektiert und die Verwendung unterschiedlich langer Hüllen in einem vollautomatisierten Produktionsprozess zur Herstellung von Würsten möglich.

Gemäß einer bevorzugten Weiterbildung weist die Hülle einen Stopfen auf, wobei die Steuerungsvorrichtung zur Bestimmung der Stopfenlänge eingerichtet ist. Die Verwendung von Stopfen, welche typischerweise an einem der Enden der schlauchförmigen Hüllen angeordnet sind, bringt Vorteile bezüglich der Produktion unterschiedlicher Typen von Würsten mit sich. Werden solche Hüllen in vorbekannten Füllvorrichtungen verwendet, so ist die Stopfenlänge ein weiterer Parameter, der vom Bediener manuell einzugeben ist. Bei der erfindungsgemäßen Vorrichtung kann die Breite des Stopfens nach dem Aufschieben der Hülle auf das Füllrohr, insbesondere basierend auf der Position der Aufzieheinrichtung nach dem Aufschieben, ermittelt werden. Erneut wird hierdurch der Bediener von Eingabeerfordernissen befreit, eine Fehlerquelle eliminiert und Längentoleranzen bezüglich der Stopfenlängen frühzeitig detektiert. Die Kenntnis über die genaue Stopfenlänge ermöglicht es darüber hinaus, nachgelagerte Verfahrensschritte dahingehend zu optimieren, dass einzelne Vorrichtungsaktuatoren exakt vorpositioniert werden können, womit der Produktionsprozess insgesamt weitere optimiert und beschleunigt werden kann.

Die Vorrichtung wird dadurch weitergebildet, dass diese einen Darmschieber aufweist, welcher dazu eingerichtet ist, den Mitnehmerring in der Füllposition axial zur Füllrohrlängsachse zu bewegen, und ein Darmbremssystem, wobei der axiale Abstand zwischen Darm-bremssystem und Füllrohr-Längsachse veränderbar ist, und wobei die Steuerungsvorrichtung dazu eingerichtet, die Position des Darmbremssystems und die Position des Darmschiebers axial zur Füllrohrlängsachse zu steuern. Eine derartige Steuerungsvorrichtung ist, wie bereits oben ausgeführt, dazu in der Lage, die ermittelten Sensordaten weiterzuverarbeiten und für folgende Prozessschritte zu nutzen. Eine Positionierung von Mitnehmerring und Darmbremssystem in Abhängigkeit der ermittelten Hüllen und Stopfendimensionen erhöht die Prozess- und Produktionsgeschwindigkeit signifikant. Bei Vorrichtungen, die aus Stand der Technik bekannt sind, sind die Positionen von Mitnehmerring und Darm-bremssystem im Rahmen sogenannter Messfahrten zu ermitteln, bei denen Mitnehmerring und Darmbremssystem sehr langsam solange vorgeschoben werden, bis dieser an die Hüllen oder die Stopfen unmittelbar heranreichen und sich der Vorschubwiderstand erhöht. Dieses ist bei Vorrichtungen im Stand der Technik nicht nur zeitaufwendig, sondern unter ungünstigen Bedingungen für die Qualität der Hüllen und deren Oberflächenbeschaffenheit nachteilig. Das erfindungsgemäße Anfahren von Vorpositionen von Mitnehmerring und Darmbremssystem in Abhängigkeit von der sensierten und mittels der Steuerungsvorrichtung weiterverarbeiteten Daten, ermöglicht somit eine deutlich höhere Prozessqualität und einen insgesamt höheren Fertigungsoutput.

Bezugnehmend auf Verfahrensaspekte wird die Erfindung dadurch weitergebildet, dass das Verfahren weiterhin den Schritt aufweist: Bestimmung der Hüllenlänge, insbesondere aus der Position des Mitnehmerrings und/der der Aufschiebeinrichtung. Bezüglich einer ausführlichen Diskussion der Vorteile sei auf obige Ausführungen verwiesen. Zusammenfassend ermöglicht es die Bestimmung der Hüllenlänge, den Bediener von einer Eingabe derselben zu entlasten, die Verwendung unterschiedlicher Hüllenlängen in einem automatisierten Produktionsprozess wird ermöglicht und Längentoleranzen bezüglich der Hüllen detektierbar.

Das Verfahren wird durch den Schritt weitergebildet: Bestimmung der Länge eines an der Hülle angeordneten Stopfens, insbesondere aus der Position der Aufschiebeinrichtung nach dem vollständigen Aufschieben der Hülle auf das Füllrohr. Die Bestimmung der Stopfenlänge ermöglicht in bekannter Weise eine Entlastung des Bedieners, eine Beschleunigung des Produktionsprozesses und eine verbesserte Überwachung desselben.

Darüber hinaus weist das Verfahren weiterhin bevorzugt den Schritt auf: Stoppen der Füllvorrichtung, wenn eine Überschreitung einer definierbaren, maximalen Stopfenlänge detektiert wird, oder wenn die Hülle nicht vollständig auf das Füllrohr aufschiebbar ist, oder wenn die Hülle während des Aufschiebens abknickt. Treten die genannten Fehler beim Aufschieben der Hülle auf das Füllrohr auf, so wird bei im Stand der Technik vorbekannten Füllverfahren der Produktionsprozess häufig empfindlich gestört. Es kommt unter Umständen zur Produktion von Ausschussware, unter Umständen ist die Vorrichtung umfassend zu reinigen, und es ist erforderlich, dass ein Bediener oder eine alternative Aufsichtsperson den Verfahrensablauf überwacht. Der erfindungsgemäße Verfahrensschritt ermöglicht somit vorteilhaft eine automatisierte Erkennung von Fehlern beim Aufbringen der Hülle auf das Füllrohr. Die Maschine wird unmittelbar gestoppt, wodurch die Produktion von Ausschussware verhindert wird. Auch wird eine weitergehende Beschädigung der Vorrichtung verhindert. Der Bediener wird ferner von der Notwendigkeit einer kontinuierlichen Überwachung entlastet und im Falle des Auftretens eines der Fehler über das Auftreten desselben informiert.

Weiterhin wird bevorzugt, dass das Verfahren den Schritt aufweist: Steuerung der Position eines axial zur Füllrohr-Längsachse bewegbaren Darmbremssystems so, dass der Abstand des Darmbremssystems von einem dem Darmbremssystem zugewandten, offen Ende des Füllrohrs, in der Füllposition größer ist als die ermittelte Stopfenlänge. Bei der Verwendung unterschiedlich langer Stopfen ist die Position des Darmbremssystems an die Stopfenlänge anzupassen. Durch die Vermessung des Stopfens während der vorhergehenden Verfahrensschritte kann nun die Positionierung des Darmbremssystems zielgerichtet in Abhängigkeit von der Stopfenlänge vorgenommen werden. Alternativ oder zusätzlich ist darüber hinaus eine Überprüfung dahingehend möglich, inwieweit eine detektierte Stopfenlänge größer ist als eine von dem Verfahren und der Vorrichtung tolerierbare maximale Stopfenlänge. Werden beispielsweise Stopfenlängen verwendet, die nicht kompatibel sind mit dem möglichen Verfahrweg des Darmbremssystems, so ist die Generierung einer Fehlermeldung möglich. Insgesamt ermöglicht es die zielgerichtete Positionierung des Darmbremssystems, dass nach dem Rotieren eines Füllrohrs aus der Beschickungsposition in die Befüllposition das Darmbremssystem innerhalb kürzester Zeit korrekt ausgerichtet werden kann und ohne relevanten Zeitverzug mit der Produktion der Würste begonnen werden kann.

Die Erfindung wird weitergebildet durch den Verfahrensschritt: Steuerung der Position eines axial zur Füllrohr-Längsachse bewegbaren Darmschiebers so, dass die Position des Darmschiebers mit der Hüllenlänge korrespondiert. Bei Vorrichtungen, die aus dem Stand der Technik bekannt sind, ist eine langsame und zeitaufwendige Detektionsfahrt des Darmaufschiebers erforderlich, nachdem ein mit einer Hülle bestücktes Füllrohr von der Beschickungsposition in die Produktionsposition gelangt ist. Da aus dem erfindungsgemäßen Verfahren die Länge der Hülle vorbekannt ist, kann der Darmschieber unmittelbar in eine Position verfahren werden, die mit der Länge der Hülle korrespondiert. Eine zeitaufwendige Detektionsfahrt des Darmschiebers ist nicht länger nötig, wodurch erneut Produktions- und Rüstzeiten signifikant reduziert werden.

Nachfolgend wird die Erfindung anhand eines bevorzugten Ausführungsbeispiels unter Bezugnahme auf die nachfolgenden Figuren näher beschrieben. Hierbei zeigen:
- Fig. 1:: eine perspektivische Ansicht einer Maschine zum Füllen schlauchförmiger Hüllen mit einer erfindungsgemäßen Füllvorrichtung;
- Fig. 2:: eine Seitenansicht auf die Füllmaschine und die erfindungsgemäße Füllvorrichtung nach Fig. 1;
- Fig. 3:: eine Draufsicht auf die Füllmaschine und die erfindungsgemäße Füllvorrichtung nach Fig. 1;
- Fig. 4:: eine perspektivische Ansicht eines vergrößerten Ausschnittes der erfindungsgemäßen Füllvorrichtung nach Fig. 1 und einer daran angeordneten Hüllen-Beladeeinheit für schlauchförmige Hüllen;
- Fig. 5-6:: perspektivische Ansichten wesentlicher Bauteile der Füllvorrichtungen nach Fig. 1 während der Abfolgen aufeinanderfolgender Verfahrensschritte;
- Fig. 7:: ein überblickartiges Blockschaltbild eines erfindungsgemäßen Verfahrens; und
- Fig. 8:: ein detailliertes Blockschaltbild eines erfindungsgemäßen Verfahrens.

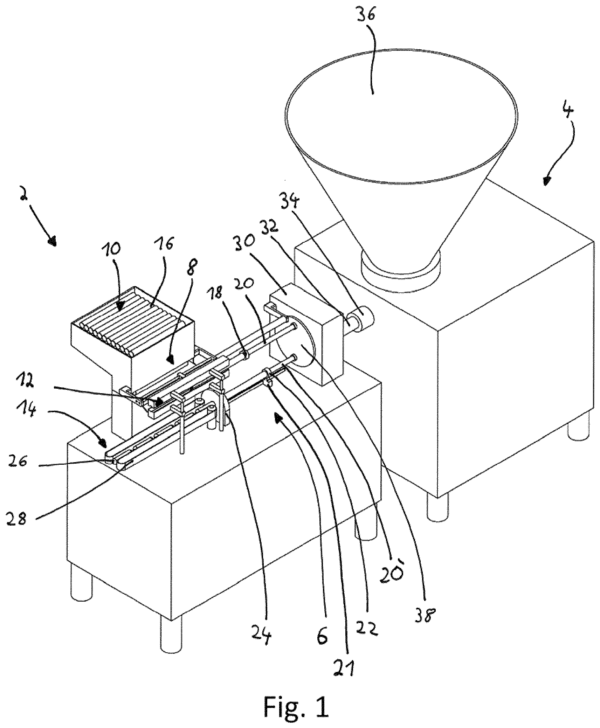

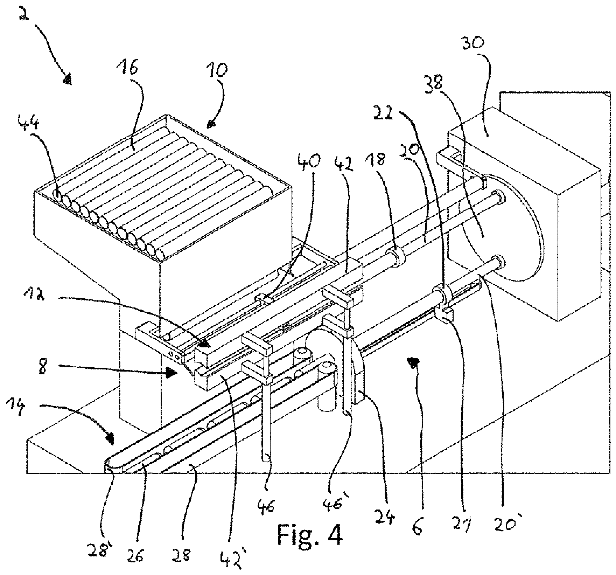

Die Figur 1 zeigt eine Maschine 4 zum Füllen schlauchförmiger Hüllen 16, insbesondere von Kunst- oder Naturdärmen, in Verbindung mit einem Vorsatzgerät 2, an dem eine Füllvorrichtung 6 und eine Hüllen-Beladeeinheit 8 angeordnet sind. Die Maschine 4 weist ferner einen Fülltrichter 36 und einen Extrusionskopf 34 auf, der über ein Abgaberohr 32 mit einem Abdrehkopf 30 der Füllvorrichtung 6 medienleitend gekoppelt ist. Die Hüllen-Beladeeinheit 8 umfasst ein Hüllenmagazin 10 zur Aufnahme einer Vielzahl schlauchförmiger Hüllen 16 und eine Hüllengreifeinrichtung 12. Ferner ist an dem Vorsatzgerät 2 eine Fördereinrichtung 14 mit zwei im Abstand zueinander in einer horizontalen Ebene verlaufenden Förderelementen 28 sowie 28' (vgl. Fig. 4) angeordnet. Die Fördereinrichtung 14 dient dem Transport der von der Füllvorrichtung 6 hergestellten Würste 26.

Die Füllvorrichtung 6 dient dem Füllen der schlauchförmigen Hüllen 16 mittels der vom Extrusionskopf 34 geförderten pastösen Masse. Der Abdrehkopf 30 weist ein - revolverartig - drehbar aufgenommenes Aufnahmeteil 38 für zwei, jeweils wiederum dreh- und antreibbar am Aufnahmeteil 38 angeordnete Füllrohre 20, 20' auf. Das drehbare Aufnahmeteil 38 ist mit einer in der horizontalen Ebene verlaufenden Drehachse ausgebildet. Die Drehachse des als Schwenkplatte ausgebildeten Aufnahmeteils 38 und die Drehachsen der Füllrohre 20, 20' verlaufen parallel zueinander. Ferner sind die Drehachsen der Füllrohre 20, 20' gleichmäßig von der Drehachse des Aufnahmeteils 38 beabstandet angeordnet. Damit ist ein vereinfachter Wechsel der Füllrohre 20, 20' zwischen den Positionen an der Füllvorrichtung 6 möglich. Auf das Füllrohr 20 wird in der oberen Position, der Beschickungsposition, eine schlauchförmige Hülle 16 aufgeschoben, und an dem Füllrohr 20' in der unteren Position, der Füllposition, erfolgt bevorzugt gleichzeitig das Füllen einer auf dem Füllrohr 20' aufgeschobenen schlauchförmigen Hülle 16.

Dem in der oberen Beschickungsposition angeordneten Füllrohr 20 ist die Hüllen-Beladeeinheit 8 mit ihrer Hüllengreifeinrichtung 12 zugeordnet. Die Hüllengreifeinrichtung 12 umfasst zwei relativ zueinander beweglich gehaltene Greiferbacken 42, 42' (vgl. Fig. 4), mit denen eine schlauchförmige Hülle 16 von dem Hüllenmagazin 10 übernommen wird. Die Hülle 16 ist in der Hüllengreifeinrichtung 12 zumindest gehalten.

Dem in der Füllposition angeordneten Füllrohr 20' ist ein Darmbremssystem, auch bezeichnet als Hüllenbremssystem, zugeordnet, welches insbesondere bewirkt, dass die auf dem Füllrohr 20' aufgezogene Hülle 16 während des Befüllens derselben entrafft und damit kontrolliert vom Füllrohr 20' abgegeben wird. Gleichzeitig stellt das Darmbremssystem 24 sicher, dass die noch auf dem Füllrohr 20' verbliebene Hülle 16 während des Abdrehens der Hülle 16 und dem Erzeugen einer Abteilstelle zwischen zwei aufeinanderfolgenden Strangabschnitten eines zu erzeugenden Stranges von Würsten 26 zusammen mit dem Füllrohr 20' um seine Drehachse gedreht wird.

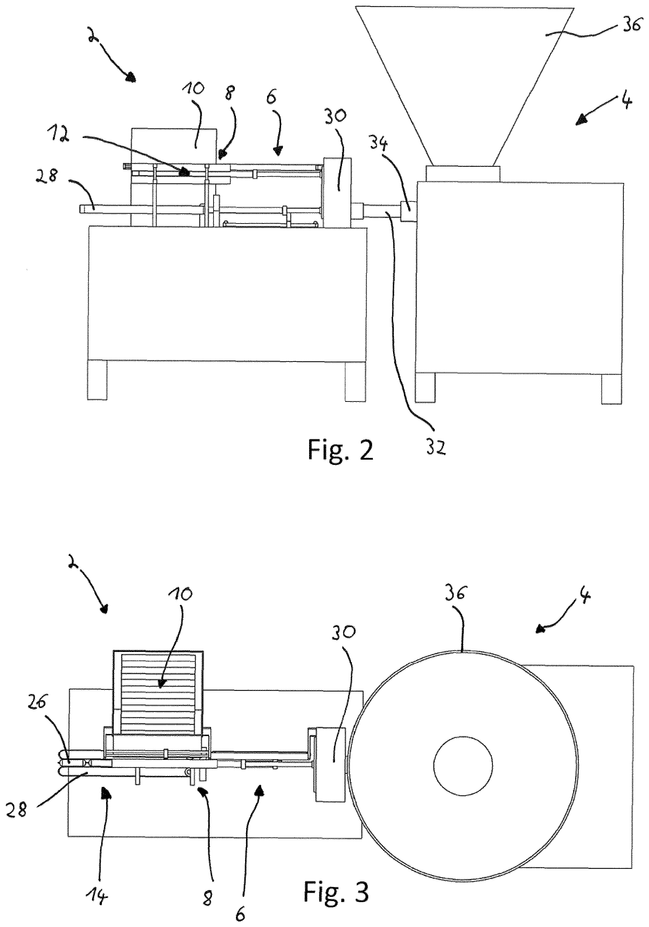

Die Figuren 2 und 3 zeigen eine Seitenansicht, bzw. eine Draufsicht der Füllvorrichtung gemäß Figur 1. In Figur 4 ist die Hüllengreifeinrichtung 12 näher detailliert. Die Hüllengreifeinrichtung 12 weist zwei Greiferbacken 42, 42' auf, die über Greifergestänge 46, 46' angelenkt sind. Die Hüllengreifeinrichtung 12 ermöglicht die Aufnahme einzelner Hüllen 16 aus dem Hüllenmagazin 10, ein Halten der Hüllen 16 durch Verfahren der Greiferbacken 42, 42' mithilfe der Greifergestänge 46, 46' relativ zueinander und ein Ausrichten der Hülle 16 axial zum Füllrohr 20. Nach dem Ausrichten der Hülle 16 axial zum Füllrohr 20 werden die Greiferbacken 42, 42' geringfügig geöffnet, sodass die Aufzieheinrichtung 40 die Hülle auf das Füllrohr 20 in Axialrichtung aufschieben kann. Durch das Aufschieben der Hülle 16 auf das Füllrohr 20 wird der Mitnehmerring 18 ebenfalls vorgeschoben.

Eine Sensiervorrichtung 49 mit Sensoren ist dem Mitnehmerring 18 und/oder der Aufzieheinrichtung 40zugeordnet, die eine Bestimmung deren Position und weiterer Größen, wie beispielsweise deren Translationsgeschwindigkeit, ermöglichen. Die Sensiervorrichtung 49 weist eine Steuerungsvorrichtung 52 und mindestens einen Wegaufnahmesensor und/oder Linearsensor zur Ermittlung der Position des Mitnehmerrings (22) und/oder der Aufschiebeinrichtung 40 auf. Das Füllrohr 20' befindet sich in der Füllposition, allerdings ist auf dieses in Figur 4 keine Hülle 16 aufgebracht. Auf dem Füllrohr 20' ist ein Mitnehmerring 22 angeordnet. Dieser Mitnehmerring 22 ist mittels des Darmschiebers 21 in Axialrichtung verschiebbar. Im Betrieb ist es damit möglich, die Hülle 16 während des Befüllens derselben in Richtung des Darmbremssystems 24 nachzuschieben. Ein solches Nachschieben ist erforderlich, da die geraffte, schlauchförmige Hülle 16 während des Befüllens entrafft und verarbeitet wird. Das Darmbremssystem 24 ist ebenso wie der Mitnehmerring 22 in Axialrichtung bewegbar gelagert. Dieses ist insbesondere dann erforderlich, wenn die Hüllen 16 Stopfen 44 aufweisen. Diese Stopfen 44 verhindern, dass eine Hülle 16 vollständig auf ein Füllrohr 20, 20' aufschiebbar ist. Auch variiert die Länge dieser Stopfen 44. Zur Ermöglichung einer Verarbeitung unterschiedlicher Stopfenlängen 44 ist es somit erforderlich, das Darmbremssystem 24 in Axialrichtung, bezogen auf die Füllrohre 20, 20', beweglich zu lagern. Sowohl der Mitnehmerring 22 als auch das Darmbremssystem 24 können mittels Aktuatoren (nicht dargestellt) hinsichtlich ihrer Axialposition verschoben werden.

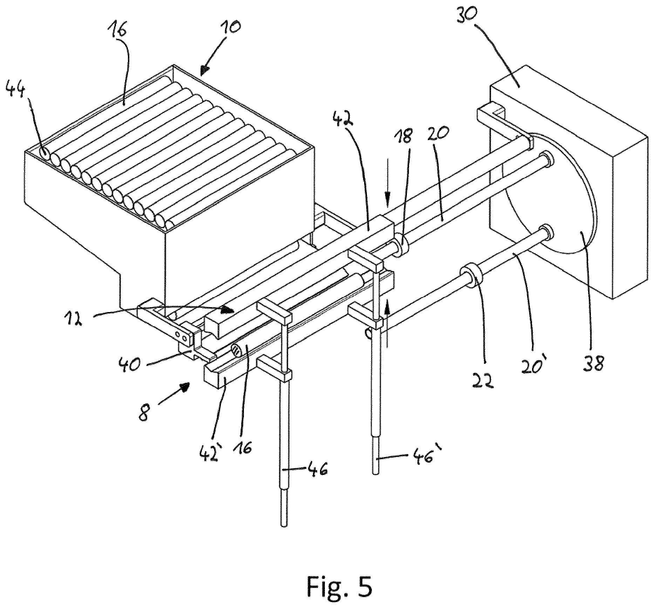

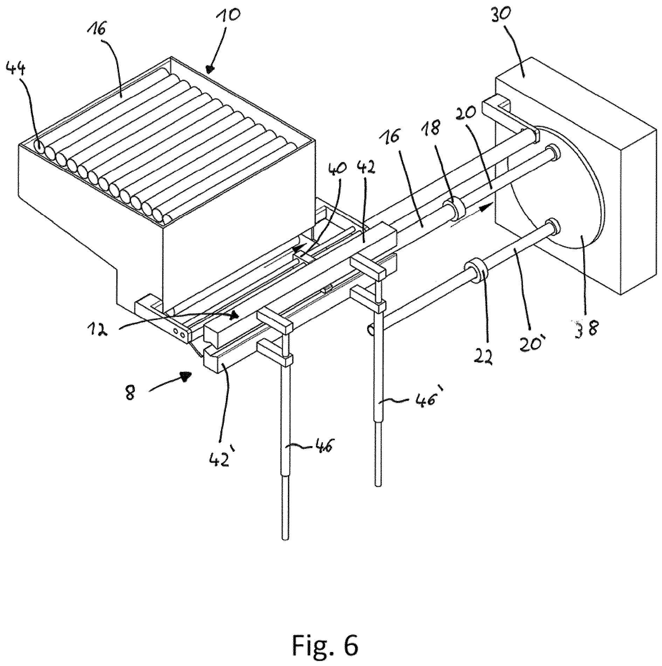

In den Figuren 5 und 6 sind die Füllvorrichtungen während der Abfolge aufeinanderfolgender Verfahrensschritte gezeigt. In Figur 5 gelangt zunächst aus dem Hüllenmagazin 10 eine Hülle 16 auf die untere Greiferbacke 42'. Die Greiferbacken 42 und 42' befinden sich in einem geöffneten Zustand. Ferner befindet sich der Mitnehmerring 18 in einer Position nahe dem offenen Ende des Füllrohrs 20. In Figur 6 sind die Greiferbacken 42, 42' nun so ausgerichtet, dass diese die Hülle 16 axial in Bezug auf das Füllrohr 20 ausrichten. Hierzu werden die Greiferbacken 42, 42' mittels der Greifergestänge 46, 46' in die betreffende Position gebracht. Die Hülle 16 wird durch die Greiferbacken 42, 42' zwar positioniert, jedoch so lose gehalten, dass die Aufzieheinrichtung 40 die Hülle 16 axial auf das Füllrohr aufzuschieben vermag. Die Hülle 16 schiebt dabei den Mitnehmerring 18 in Richtung des Aufnahmeteils 38 auf das Füllrohr 20 auf. Nach dem Aufschieben der Hülle 16 auf das Füllrohr 20 kann nun das Aufnahmeteil 38 um 180° rotiert werden, womit das Füllrohr 20 in die Füllposition gelangt. Das Füllrohr 20 kann in diesem Fall neu mit einer Hülle 16 beschickt werden.

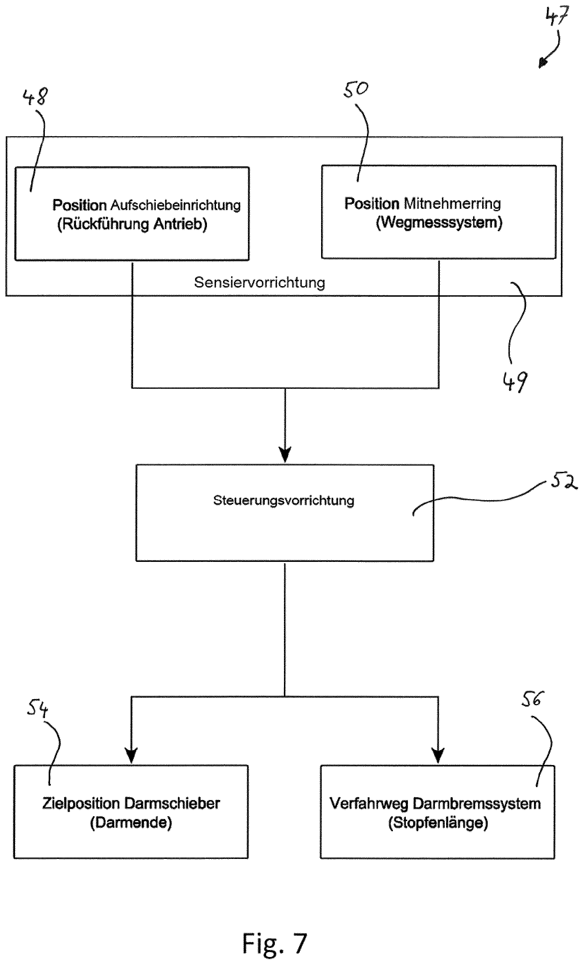

Figur 7 zeigt ein Blockschaltbild 47 in welchem die Verarbeitung der sensierten Daten "Position Aufschiebeinrichtung" 48 sowie "Position Mitnehmerring" 50 überblicksartig gezeigt ist. Die Position der Aufschiebeinrichtung 48 sowie die Position des Mitnehmerrings 50 werden mittels einer Sensiervorrichtung 49 ermittelt bilden Eingänge für die Steuerungsvorrichtung 52. Auf Basis der Positionen 48 und 50 ermittelt die Steuerungsvorrichtung 52 zum einen eine Zielposition 54 des Darmschiebers 21, welche angepasst ist, an die ermittelte Länge der Hüllen 16 sowie einen Verfahrweg 56 des Darmbremssystems 24, welche angelehnt ist an die ermittelte Länge der Stopfen 44.

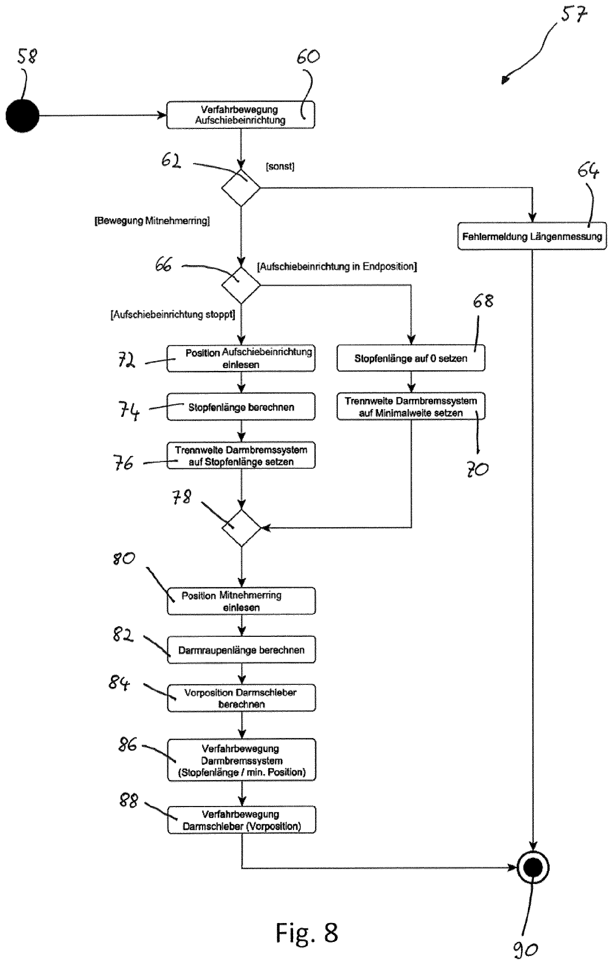

Der Ablauf des Verfahrens ist im Verfahrensablaufplan 57 der Figur 8 detailliert. Das Verfahren beginnt an der Startposition 58. Die Hülle 16 ist bei diesem Verfahrensschritt axial zum Füllrohr 20 ausgerichtet. Es folgt nun der Verfahrensschritt 60, bei dem die Aufschiebeinrichtung 40 verfahren wird, um die Hülle 16 auf das Füllrohr 20 aufzuschieben. Im Verfahrensschritt 62 wird nun detektiert, inwieweit der Mitnehmerring 18 durch die Hülle 16 bewegt wird. Bewegt sich der Mitnehmerring 18 trotz Bewegung der Aufschiebeinrichtung 40 nicht, so erfolgt in Verfahrensschritt 64 die Generierung einer Fehlermeldung bezüglich der Längenmessung. Das Verfahren gelangt anschließend in seinen Endzustand 90.

Wird in Schritt 62 detektiert, dass sich der Mitnehmerring 18 bewegt, so wird in dem nachfolgenden Schritt 66 eine Unterscheidung dahingehend getroffen, in welcher Position die Aufschiebeinrichtung 40 stoppt. Stoppt die Aufschiebeinrichtung 40 in ihrer Endposition, bei der die Hülle 16 vollständig auf das Füllrohr 20 aufgeschoben ist, so wird im Schritt 68 die Stopfenlänge auf null gesetzt. Ist es folglich der Aufschiebeinrichtung 40 möglich, die Hülle 16 vollständig auf das Füllrohr 20 aufzuschieben, so kann daraus gefolgert werden, dass die Hülle 16 über keinen Stopfen 44 verfügt. Nach dem Setzen der Stopfenlänge auf null im Schritt 68 erfolgt im Schritt 70 ein Setzen der Trennweite des Darmbremssystems 24.

Stoppt die Aufschiebeinrichtung 40 im Verfahrensschritt 66 jedoch vor Erreichen der Endposition, so erfolgt im Schritt 72 ein Einlesen der Position der Aufschiebeinrichtung 40. Unter Berücksichtigung der Länge des Füllrohrs 20 und der Endposition der Aufschiebeinrichtung 40 wird im Schritt 74 die Stopfenlänge berechnet. Die im Schritt 74 berechnete Stopfenlänge wird anschließend im Schritt 76 dazu verwendet, die Positionierung des Darmbremssystems 24 an die ermittelte Länge der Stopfen 44 anzupassen.

Die im Schritt 66 getrennten Verfahrenszweige werden im Schritt 78 zusammengefügt. Im Schritt 80 erfolgt ein Einlesen der Position des Mitnehmerrings 22. In Kenntnis der Position des Mitnehmerrings 22 und der Stoppposition bzw. Endposition der Aufschiebeinrichtung 40 wird es ermöglicht, im Schritt 82 die Länge der Hüllen (Darmraupen) 16 zu berechnen. In Abhängigkeit der Länge der Hüllen 16 wird im Schritt 84 eine Vorposition für den Darmschieber 21 berechnet. Der Darmschieber 21 kann so bereits grob positioniert werden, sodass zeitaufwendige Detektionsfahrten auf ein Minimum beschränkt werden können. Im Schritt 86 erfolgt schließlich eine Verfahrbewegung des Darmbremssystems 24 in Abhängigkeit von dem Vorhandensein eines Stopfens 44 bzw. der ermittelten Stopfenlänge. Im Schritt 88 erfolgt eine Verfahrbewegung des Darmschiebers 21 hin zu der ermittelten Vorposition. Das Verfahren erreicht anschließend seinen Endzustand 90.

### Liste der verwendeten Bezugszeichen

- 2: Vorsatzgerät
- 4: Maschine
- 6: Füllvorrichtung
- 8: Hüllen-Beladeeinheit
- 10: Hüllenmagazin
- 12: Hüllengreifeinrichtung
- 14: Fördereinrichtung
- 16: Hülle
- 18: Mitnehmerring
- 20, 20': Füllrohr
- 21: Darmschieber
- 22: Mitnehmerring
- 24: Darmbremssystem
- 26: Wurst
- 28, 28': Förderelement
- 30: Abdrehkopf
- 32: Abgaberohr
- 34: Extrusionskopf
- 36: Fülltrichter
- 38: Aufnahmeteil
- 40: Aufschiebeinrichtung
- 42, 42': Greiferbacken
- 44: Stopfen
- 46, 46': Greifergestänge
- 47: Blockschaltbild
- 48: Sensorposition Aufschiebeinrichtung
- 49: Sensiervorrichtung
- 50: Sensorposition Mitnehmerring
- 52: Steuerungsvorrichtung
- 54: Zielposition Darmschieber
- 56: Verfahrweg Darmbremssystem
- 57: Verfahrensablaufplan
- 58: Start
- 60: Verfahrbewegung Aufschiebeinrichtung
- 62: Verzweigung: Bewegung Mitnehmerring
- 64: Fehlermeldung Längenmessung
- 66: Verzweigung: Endposition Aufschiebeinrichtung
- 68: Stopfenlänge auf "Null" setzen
- 70: Trennweite Darmbremssystem setzen
- 72: Position Aufschiebeinrichtung einlesen
- 74: Stopfenlänge berechnen
- 76: Trennweite Darmbremssystem setzen
- 78: Zusammenführung der Verfahrenszweige
- 80: Position Mitnehmerring einlesen
- 82: Hüllenlänge berechnen
- 84: Vorposition Darmschieber berechnen
- 86: Verfahrbewegung Darmbremssystem
- 88: Verfahrbewegung Darmschieber
- 90: Endzustand

## Patentansprüche

1. Füllvorrichtung (6) zum Füllen von gerafften, schlauchförmigen Hüllen (16) mit einer pastösen Masse, insbesondere Wurstbrät, mit
einem Füllrohr (20, 20'), auf das eine geraffte, schlauchförmige Hülle (16) aufschiebbar ist,
einem bewegbaren, ein erstes Ende des Füllrohrs (20, 20') aufnehmenden Aufnahmeteil (38), welches dazu eingerichtet ist, das Füllrohr (20, 20') in eine Beschickungsposition, in welcher die Hülle (16) auf das Füllrohr (20, 20') aufbringbar ist, und in eine Füllposition, in welcher die Hülle (16) befüllbar ist, zu bewegen,
einer axial zur Füllrohr-Längsachse (20, 20') bewegbaren Aufschiebeinrichtung (40) zum Aufschieben der Hülle (16) auf das Füllrohr (20, 20') in der Beschickungsposition,
einem auf dem Füllrohr (20, 20') angeordneten, axial bewegbaren Mitnehmerring (18), **gekennzeichnet durch** eine Sensiervorrichtung (49) zur Ermittlung der Position des Mitnehmerrings (22) und/oder der Aufschiebeinrichtung (40) beim Aufschieben der gerafften Hülle (16) auf das Füllrohr (20, 20').

2. Vorrichtung (6) nach Anspruch 1,
**dadurch gekennzeichnet, dass** die Sensiervorrichtung (49) mindestens einen Wegaufnahmesensor und/oder Linearsensor zur Ermittlung der Position des Mitnehmerrings (22) und/oder der Aufschiebeinrichtung (40) aufweist.

3. Vorrichtung (6) nach Anspruch 2,
**dadurch gekennzeichnet, dass** der mindestens einen Wegaufnahmesensor und/oder Linearsensor als induktiver Sensor und/oder als optischer Sensor ausgebildet ist.

4. Vorrichtung (6) nach Anspruch 1,
**dadurch gekennzeichnet, dass** die Position der Aufschiebeinrichtung (40) mittels Rückführung aus dessen Antriebselement ermittelt wird.

5. Vorrichtung (6) nach einem der vorhergehenden Ansprüche,
**dadurch gekennzeichnet, dass** Sensiervorrichtung (49) eine Steuerungsvorrichtung (52) aufweist, welche zur Bestimmung der Hüllenlänge eingerichtet ist.

6. Vorrichtung (6) nach Anspruch 5,
**dadurch gekennzeichnet, dass** die Hülle (16) einen Stopfen (44) aufweist, wobei die Steuerungsvorrichtung (52) zur Bestimmung der Stopfenlänge eingerichtet ist.

7. Vorrichtung (6) nach einem der Ansprüche 5 oder 6,
**dadurch gekennzeichnet, dass** die Füllvorrichtung (6) einen Darmschieber (21) aufweist, welcher dazu eingerichtet ist, den Mitnehmerring (22) in der Füllposition axial zur Füllrohr-Längsachse zu bewegen, und ein Darmbremssystem (24), wobei der axiale Abstand zwischen Darmbremssystem (24) und Füllrohr-Längsachse veränderbar ist,
und wobei die Steuerungsvorrichtung (52) dazu eingerichtet ist, die Position des Darmbremssystems (24) und die Position des Darmschiebers (21) axial zur Füllrohrlängsachse zu steuern.

8. Verfahren zum Füllen von gerafften, schlauchförmigen Hüllen (16) mit einer pastösen Masse mittels einer Füllvorrichtung (6) nach einem der vorhergehenden Ansprüche,
mindestens aufweisend die Schritte:
Bereitstellen einer gerafften, schlauchförmigen Hülle (16),
Aufschieben der Hülle (16) auf ein Füllrohr (20, 20') mittels einer Aufschiebeinrichtung (40),
Ermittlung der Position der Aufschiebeinrichtung (40) und/oder eines auf dem Füllrohr angeordneten Mitnehmerrings (18) beim Aufschieben der gerafften Hülle (16) auf das Füllrohr (20, 20').

9. Verfahren nach Anspruch 8,
weiterhin aufweisend den Schritt:
Bestimmung der Hüllenlänge, insbesondere aus der Position des Mitnehmerrings (18) und/oder der Aufschiebeinrichtung (40).

10. Verfahren nach Anspruch 8 oder 9,
weiterhin aufweisend den Schritt:
Bestimmung der Länge eines an der Hülle angeordneten Stopfens (44), insbesondere aus der Position der Aufschiebeinrichtung (40) nach dem vollständigen Aufschieben der Hülle (16) auf das Füllrohr (20, 20').

11. Verfahren nach einem der Ansprüche 8 - 10,
weiterhin aufweisend den Schritt:
Stoppen der Füllvorrichtung (6), wenn
eine Überschreitung einer definierbaren, maximalen Stopfenlänge detektiert wird, oder
wenn die Hülle (16) nicht vollständig auf das Füllrohr (20, 20') aufschiebbar ist, oder wenn die Hülle (16) während des Aufschiebens abknickt.

12. Verfahren nach einem der Ansprüche 10 oder 11, weiterhin aufweisend den Schritt:
Steuerung der Position eines axial zur Füllrohr-Längsachse bewegbaren Darmbremssystems (24) so, dass der Abstand des Darmbremssystems (24) von einem dem Darmbremssystem (24) zugewandten, offenen Ende des Füllrohrs (20, 20') in der Füllposition größer ist als die ermittelte Stopfenlänge.

13. Verfahren nach einem der Ansprüche 8 - 12,
weiterhin aufweisend den Schritt:
Steuerung der Position eines axial zur Füllrohr-Längsachse bewegbaren Darmschiebers (21) so, dass die Position des Darmschiebers (21) mit der Hüllenlänge korrespondiert.

## Claims

1. Filling apparatus (6) for filling gathered tubular cases (16) with a pasty material, in particular sausagemeat, comprising
a filling tube (20, 20') on to which a gathered tubular case (16) can be pushed,
a moveable receiving portion (38) which accommodates a first end of the filling tube (20, 20') and which is adapted to move the filling tube (20, 20') into a charging position in which the case (16) can be put on to the filling tube (20, 20') and into a filling position in which the case (16) can be filled,
a pushing-on device (40) which is moveable axially relative to the filling tube longitudinal axis (20, 20') for pushing the case (16) on to the filling tube (20, 20') in the charging position, and
an axially moveable entrainment ring (18) arranged on the filling tube (20, 20'), **characterised by** a sensing device (49) for ascertaining the position of the entrainment ring (22) and/or the pushing-on device (40) when pushing of the gathered case (16) onto the filling tube (20, 20').

2. Apparatus (6) as set forth in claim 1
**characterised in that** the sensing device (49) has at least one travel pick-up sensor and/or linear sensor for ascertaining the position of the entrainment ring (22) and/or the pushing-on device (40).

3. Apparatus (6) as set forth in claim 2
**characterised in that** the at least one travel pick-up sensor and/or linear sensor is in the form of an inductive sensor and/or an optical sensor.

4. Apparatus (6) as set forth in claim 1
**characterised in that** the position of the pushing-on device (40) is ascertained by means of feedback from its drive element.

5. Apparatus (6) as set forth in one of the preceding claims
**characterised in that** the sensing device (49) has a control device (52) adapted to determine the case length.

6. Apparatus (6) as set forth in claim 5
**characterised in that** the case (16) has a plug (44), wherein the control device (52) is adapted to determine the plug length.

7. Apparatus (6) as set forth in one of claims 5 and 6
**characterised in that** the filling apparatus (6) has a casing slider (21) adapted to move the entrainment ring (22) in the filling position axially relative to the filling tube longitudinal axis, and a casing braking system (24), wherein the axial spacing between the casing braking system (24) and the filling tube longitudinal axis is variable,
and wherein the control device (52) is adapted to control the position of the casing braking system (24) and the position of the casing slider (21) axially relative to the filling tube longitudinal axis.

8. A method of filling gathered tubular cases (16) with a pasty material, by means of a filling apparatus (6) as set forth in one of the preceding claims,
at least comprising the steps:
providing a gathered tubular case (16),
pushing the case (16) on to a filling tube (20, 20') by means of a pushing-on device (40), and
ascertaining the position of the pushing-on device (40) and/or an entrainment ring (18) arranged on the filling tube when pushing of the gathered case (16) onto the filling tube (20, 20').

9. A method as set forth in claim 8
further comprising the step:
determining the case length, in particular from the position of the entrainment ring (18) and/or the pushing-on device (40).

10. A method as set forth in claim 8 or claim 9
further comprising the step:
determining the length of a plug (44) arranged at the case, in particular from the position of the pushing-on device (40) after the case (16) has been completely pushed on to the filling tube (20, 20').

11. A method as set forth in one of claims 8 through 10 further comprising the step:
stopping the filling apparatus (6) when
exceeding of a definable maximum plug length is detected, or
when the case (16) cannot be pushed completely on to the filling tube (20, 20'),
or when the case (16) buckles while being pushed on.

12. A method as set forth in one of claims 10 or 11
further comprising the step:
controlling the position of a casing braking system (24) moveable axially relative to the filling tube longitudinal axis in such a way that the spacing of the casing braking system (24) from an open end of the filling tube (20, 20'), that faces towards the casing braking system (24), is greater in the filling position than the detected plug length.

13. A method as set forth in one of claims 8 through 12
further comprising the step:
controlling the position of a casing pushing slider (21) which is moveable axially relative to the filling tube longitudinal axis in such a way that the position of the casing pushing slider (21) corresponds to the case length.

## Revendications

1. Dispositif de remplissage (6) pour remplir des enveloppes (16) tubulaires froncées avec une masse pâteuse, en particulier avec de la chair à saucisse, avec
un tube de remplissage (20, 20'), sur lequel l'enveloppe (16) tubulaire froncée peut être enfilée,
une partie de réception (38) pouvant être déplacée, recevant une première extrémité du tube de remplissage (20, 20'), laquelle est mise au point pour déplacer le tube de remplissage (20, 20') dans une position de chargement, dans laquelle l'enveloppe (16) peut être installée sur le tube de remplissage (20, 20'), et dans une position de remplissage, dans laquelle l'enveloppe (16) peut être remplie,
un système d'enfilage (40) pouvant être déplacé de manière axiale par rapport à l'axe longitudinal de tube de remplissage (20, 20'), pour enfiler l'enveloppe (16) sur le tube de remplissage (20, 20') dans la position de chargement,
une bague d'entraînement (18) disposée sur le tube de remplissage (20, 20'), pouvant être déplacée de manière axiale,
**caractérisé par** un dispositif de détection (49) pour déterminer la position de la bague d'entraînement (22) et/ou le système d'enfilage (40) lors de l'enfilage de l'enveloppe (16) froncée sur le tube de remplissage (20, 20').

2. Dispositif (6) selon la revendication 1,
**caractérisé en ce que** le dispositif de détection (49) présente au moins un capteur d'enregistrement de déplacement et/ou un capteur linéaire pour déterminer la position de la bague d'entraînement (22) et/ou du système d'enfilage (40).

3. Dispositif (6) selon la revendication 2,
**caractérisé en ce que** l'au moins un capteur d'enregistrement de déplacement et/ou un capteur linéaire sont réalisés en tant que capteur inductif et/ou en tant que capteur optique.

4. Dispositif (6) selon la revendication 1,
**caractérisé en ce que** la position du système d'enfilage (40) est déterminée au moyen du retour depuis son élément d'entraînement.

5. Dispositif (6) selon l'une quelconque des revendications précédentes,
**caractérisé en ce que** le dispositif de détection (49) présente un dispositif de commande (52), lequel est mis au point pour définir la longueur d'enveloppe.

6. Dispositif (6) selon la revendication 5,
**caractérisé en ce que** l'enveloppe (16) présente un bouchon (44), dans lequel le dispositif de commande (52) est mis au point pour définir la longueur de bouchon.

7. Dispositif (6) selon l'une quelconque des revendications 5 ou 6,
**caractérisé en ce que** le dispositif de remplissage (6) présente un coulisseau de boyau (21), lequel est mis au point pour déplacer la bague d'entraînement (22) dans la position de remplissage de manière axiale par rapport à l'axe longitudinal de tube de remplissage, et un système de ralentissement de boyau (24), dans lequel la distance axiale entre le système de ralentissement de boyau (24) et l'axe longitudinal de tube de remplissage peut être modifiée,
et dans lequel le dispositif de commande (52) est mis au point pour commander la position du système de ralentissement de boyau (24) et la position du coulisseau de boyau (21) de manière axiale par rapport à l'axe longitudinal de tube de remplissage.

8. Procédé pour remplir des enveloppes (16) tubulaires froncées avec une masse pâteuse au moyen d'un dispositif de remplissage (6) selon l'une quelconque des revendications précédentes,
présentant au moins les étapes :
de fourniture d'une enveloppe (16) tubulaire froncée ,
d'enfilage de l'enveloppe (16) sur un tube de remplissage (20, 20') au moyen d'un système d'enfilage (40),
de détermination de la position du système d'enfilage (40) et/ou d'une bague d'entraînement (18) disposée sur le tube de remplissage lors de l'enfilage de l'enveloppe (16) froncée sur le tube de remplissage (20, 20').

9. Procédé selon la revendication 8,
présentant par ailleurs l'étape :
de définition de la longueur d'enveloppe, en particulier à partir de la position de la bague d'entraînement (18) et/ou du système d'enfilage (40).

10. Procédé selon la revendication 8 ou 9,
présentant par ailleurs l'étape :
de définition de la longueur d'un bouchon (44) disposé sur l'enveloppe, en particulier à partir de la position du système d'enfilage (40) après l'enfilage complet de l'enveloppe (16) sur le tube de remplissage (20, 20').

11. Procédé selon l'une quelconque des revendications 8 - 10,
présentant par ailleurs l'étape :
d'arrêt du dispositif de remplissage (6) quand
un dépassement d'une longueur de bouchon maximale pouvant être définie est détecté
ou
quand l'enveloppe (16) ne peut être enfilée totalement sur le tube de remplissage (20, 20')
ou quand l'enveloppe (16) se plie au cours de l'enfilage.

12. Procédé selon l'une quelconque des revendications 10 ou 11,
présentant par ailleurs l'étape :
de commande de la position d'un système de ralentissement de boyau (24) pouvant être déplacé de manière axiale par rapport à l'axe longitudinal de tube de remplissage si bien que la distance du système de ralentissement de boyau (24) par rapport à une extrémité ouverte, tournée vers le système de ralentissement de boyau (24), du tube de remplissage (20, 20') dans la position de remplissage est plus grande que la longueur de bouchon déterminée.

13. Procédé selon l'une quelconque des revendications 8 - 12,
présentant par ailleurs l'étape :
de commande de la position d'un coulisseau de boyau (21) pouvant être déplacé de manière axiale par rapport à l'axe longitudinal de tube de remplissage de sorte que la position du coulisseau de boyau (21) corresponde à la longueur d'enveloppe.
